# EUROPÄISCHE PATENTSCHRIFT

(11) **EP 2 088 399 B1**
(45) Veröffentlichungstag und Bekanntmachung des Hinweises auf die Patenterteilung: **09.03.2016**
(21) Anmeldenummer: 08168979.6
(22) Anmeldetag: 13.11.2008
(51) Int. Cl.: G01D 5/14, G01D 11/24

(54) **Winkelmesseinrichtung**
Angle measuring device
Dispositif de mesure d'angle

(30) Priorität: 07.02.2008 DE 102008008278
(43) Veröffentlichungstag der Anmeldung: 12.08.2009
(73) Patentinhaber: Dr. Johannes Heidenhain GmbH, 83301 Traunreut (DE)
(72) Erfinder: Riepertinger, Sebastian, 83139 Söchtenau (DE)

(56) Entgegenhaltungen:
- DE-B3- 10 304 905
- DE-U1- 20 218 228

## Beschreibung

Die Erfindung betrifft eine Winkelmesseinrichtung gemäß dem Patentanspruch 1.

Winkelmesseinrichtungen, häufig auch Drehgeber genannt, dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Über Anschlusskabel werden der Winkelmesseinrichtung eine Betriebsspannung zugeführt und die Messsignale abgenommen und an eine Folgeelektronik weitergeleitet. Hierzu ist bei bekannten Winkelmesseinrichtungen an einer Kappe der Winkelmesseinrichtung eine Öffnung vorgesehen, durch die hindurch das Anschlusskabel der Winkelmesseinrichtung zugeführt und dort mit einer geeigneten elektrischen Anschlusseinheit kontaktiert werden kann. Aus der EP 1 564 529 B1 der Anmelderin ist eine Winkelmesseinrichtung mit einer Vorrichtung zur Zugentlastung des Anschlusskabels bekannt. Dort wird die Zugentlastung bzw. eine Fixierung des Anschlusskabels durch ein Federelement erreicht.

Die DE 202 18 228 U1 zeigt eine weitere Fixierung eines Anschlusskabels an einer Winkelmesseinrichtung, wobei zur Fixierung ein Deckel aufgeschraubt wird.

Der Erfindung liegt die Aufgabe zugrunde, eine Winkelmesseinrichtung der eingangs genannten Art zu schaffen, die mit einfachen Mitteln eine zuverlässige und schnelle Montage ermöglicht, wobei die Winkelmesseinrichtung eine kostengünstig herstellbare Bauweise aufweist. Diese Aufgabe wird erfindungsgemäß durch die Schaffung einer Winkelmesseinrichtung mit den Merkmalen des Patentanspruchs 1 gelöst.

Demnach umfasst die Winkelmesseinrichtung eine Kappe, ein Anschlusskabel und eine Aufnahmevorrichtung. Das Anschlusskabel umfasst seinerseits einen Fixierbereich mit einer Längsachse. Die Aufnahmevorrichtung ist an der Kappe angeordnet und dient zur Aufnahme des Fixierbereichs des Anschlusskabels. In diesem Zusammenhang weist die Aufnahmevorrichtung eine Hinterschneidung auf, zum - insbesondere formschlüssigen - Halten des Fixierbereichs in einer Richtung mit einer Richtungskomponente orthogonal zur Längsachse. Das heißt, dass die entsprechenden Haltekräfte der Hinterschneidung in einer Richtung mit einer Richtungskomponente orthogonal zur Längsachse orientiert sind. Die Längsachse des Fixierbereichs kommt in einer Position, in welcher der Fixierbereich an bzw. in der Aufnahmevorrichtung festgelegt ist entlang oder parallel zu einer ersten Achse zu liegen. Weiterhin ist die Längsachse mit einer Bewegung entlang einer zweiten Achse in die Hinterschneidung der Aufnahmevorrichtung einführbar, wobei die zweite Achse gegenüber der ersten Achse geneigt ausgerichtet ist.

In der Position, in welcher der Fixierbereich an der Aufnahmevorrichtung festgelegt ist, ist das Anschlusskabel zum Beispiel zur weiteren Montage der Winkelmesseinrichtung bereits sicher fixiert.

Mit Vorteil weist die Aufnahmevorrichtung einen Boden auf, wobei in der Position des Fixierbereichs, in welcher der Fixierbereich an der Aufnahmevorrichtung festgelegt ist, einerseits ein erster Abschnitt des Fixierbereichs auf dem Boden zu liegen kommt. Weiterhin ist ein zweiter Abschnitt des Fixierbereichs in einer geometrischen Ebene, die orthogonal zur Längsachse ausgerichtet ist und die Hinterschneidung durchdringt, bezüglich des Bodens berührungsfrei angeordnet. Mit anderen Worten befindet sich also der festgelegte Fixierbereich so in der Aufnahmevorrichtung, dass dieser den Boden partiell nicht berührt.

Gemäß einer Weiterbildung der Erfindung weist der Boden eine Ausnehmung auf, welche von der genannten Ebene geschnitten wird, um die partielle Berührungsfreiheit zwischen dem Fixierbereich und dem Boden zu erreichen. Dabei kann die Kappe mit Vorteil eine Öffnung aufweisen, durch welche eine elektrische Kupplungsvorrichtung innerhalb der Winkelmesseinrichtung von außerhalb der Kappe zugänglich ist, wobei dann die Öffnung die Ausnehmung umfassen kann. Die Öffnung weist also einen Bereich auf, der im Folgenden als Ausnehmung bezeichnet wird, in den der Fixierbereich zum Zwecke des Einführens in die Aufnahmevorrichtung eintauchen kann. Alternativ dazu kann aber auch der Boden, beispielsweise durch eine Stufe, so ausgestaltet sein, dass das Einführen des Fixierbereichs in die Aufnahmevorrichtung auch ohne eine Ausnehmung ermöglicht ist.

Weiterhin kann die Aufnahmevorrichtung einen Anschlag aufweisen, welcher räumlich so angeordnet ist, dass bezüglich einer Richtung entlang der ersten Achse die Hinterschneidung zwischen dem Anschlag und dem Boden angeordnet ist. Mit Vorteil weist dann die Aufnahmevorrichtung insbesondere zwei Anschläge auf, zur beidseitigen axialen Sicherung des Anschlusskabels.

In weiterer Ausgestaltung der Erfindung weist die Aufnahmevorrichtung einen weiteren Anschlag auf, welcher räumlich so angeordnet ist, dass bezüglich einer Richtung entlang der ersten Achse der Boden bzw. der erste Abschnitt des Fixierbereichs zwischen dem Anschlag und der Hinterschneidung angeordnet ist.

Die Winkelmesseinrichtung dient zur Bestimmung der relativen Winkelstellung zwischen zwei Bauteilen, die um eine Drehachse drehbar sind. Die Aufnahmevorrichtung ist derart ausgestaltet, dass in der Position des Fixierbereichs, in welcher der Fixierbereich an der Aufnahmevorrichtung festgelegt ist, die Längsachse des Fixierbereichs so zu liegen kommt, dass sich die Ausrichtung der Längsachse von der Ausrichtung der Drehachse unterscheidet. Insbesondere kann dann die Aufnahmevorrichtung derart ausgestaltet sein, dass die Längsachse des Fixierbereichs in einer Ebene zu liegen kommt, welche von der Drehachse rechtwinklig geschnitten wird.

Mit Vorteil kann die Kappe mit der Aufnahmevorrichtung als ein einstückiges Teil mit Hilfe eines Gussverfahrens hergestellt sein.

In einer bevorzugten Ausführungsvariante ist die Winkelmesseinrichtung so konfiguriert, dass nach erfolgter Montage eines Deckels das Anschlusskabel, das einen Fixierbereich, etwa eine Crimphülse, aufweist, auch von dem Deckel an die Aufnahmevorrichtung gedrückt wird.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

### Es zeigen die:

- Figur 1: eine perspektivische Ansicht einer Winkelmesseinrichtung mit einer Kappe, welche eine Aufnahmevorrichtung umfasst,
- Figur 2a: eine perspektivische Ansicht der Kappe während der Montage eines Anschlusskabels,
- Figur 2b: eine perspektivische Ansicht der Kappe, nach Festlegung des Fixierbereichs des Anschlusskabels an der Aufnahmevorrichtung,
- Figur 3a: eine Teilschnittdarstellung C-C der Kappe im Bereich der Aufnahmevorrichtung,
- Figur 3b: eine Teilschnittdarstellung D-D der Kappe im Bereich der Aufnahmevorrichtung,
- Figur 3c: eine Draufsicht auf die Aufnahmevorrichtung,
- Figur 4a: eine Schnittdarstellung der Aufnahmevorrichtung während der Montage eines Anschlusskabels,
- Figur 4b: eine Schnittdarstellung der Aufnahmevorrichtung nach Festlegung des Fixierbereichs des Anschlusskabels an der Aufnahmevorrichtung,
- Figur 5: eine Teilschnittdarstellung D-D im Bereich der Aufnahmevorrichtung nach Festlegung des Fixierbereichs an der Aufnahmevorrichtung mit geschlossenem Deckel.

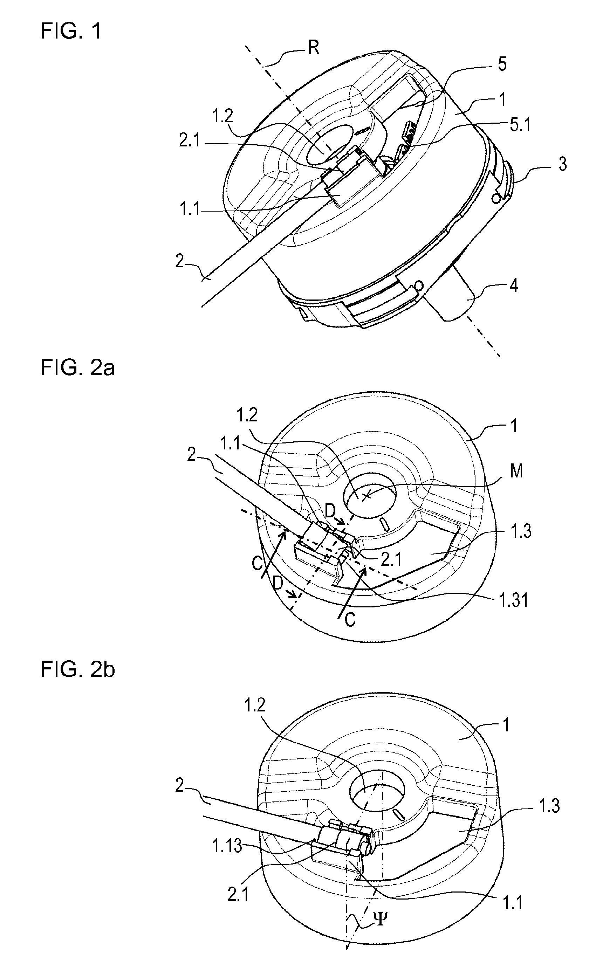

Die in der Figur 1 dargestellte Winkelmesseinrichtung weist eine Welle 4 zum Anschluss an einen zu messenden Körper auf. Die Verbindung zwischen der Welle 4 und dem zu messenden Körper wird beispielsweise mit einem durch die Welle 4 ragenden Verbindungsmittel in Form einer Befestigungsschraube realisiert.

Die Winkelmesseinrichtung selbst wird über einen Grundkörper 3 an einem weiteren Körper befestigt. Der zu messende Körper ist beispielsweise eine Motorwelle und der weitere Körper ein stationäres Motorgehäuse. Die Winkelmesseinrichtung dient also zur Bestimmung der relativen Winkelstellung zwischen dem Grundkörper 3 und der Welle 4. Derartige Winkelmesseinrichtungen werden auch häufig als Drehgeber bezeichnet.

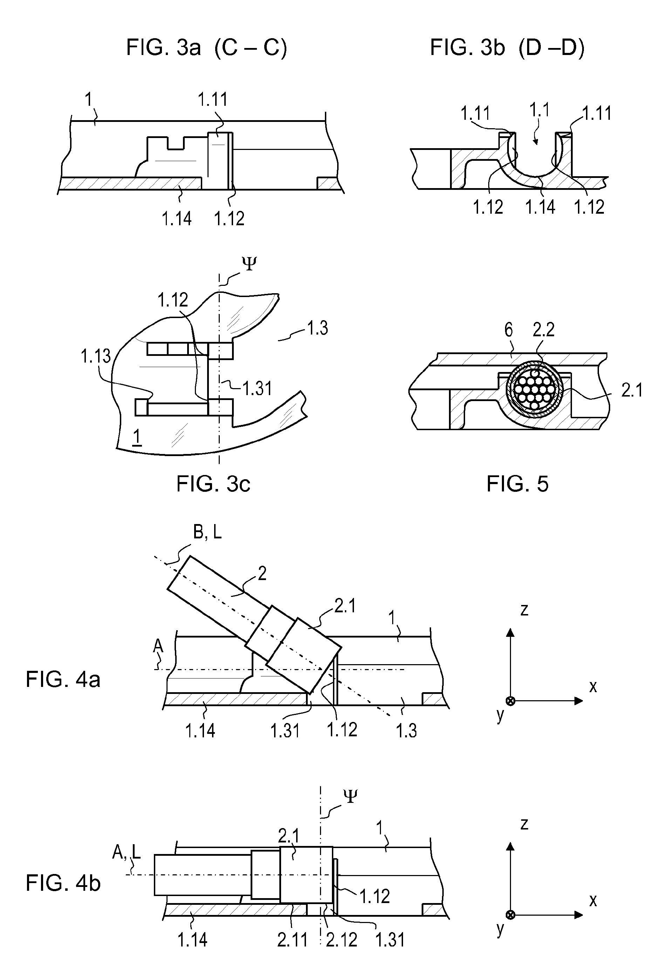

In bekannter Weise ist die Welle 4 im Grundkörper 3 um eine Drehachse R drehbar gelagert, wobei an der Welle 4 eine im Inneren der Winkelmesseinrichtung angeordnete Codescheibe befestigt ist und/oder die Welle 4 über ein Getriebe eine oder mehrere Codescheiben antreibt. Die Codescheibe wird im gezeigten Beispiel lichtelektrisch von einer Abtasteinrichtung abgetastet, so dass inkrementale oder absolute Positionsinformationen erfasst werden können. Entsprechende lichtempfindliche Detektoren befinden sich auf einer am Grundkörper 3 befestigten Leiterplatte 5. Unter anderem sind auf der Leiterplatte 5 auch elektrische Bauelemente zur Signalformung - beispielsweise zur Verstärkung und Digitalisierung - der von den Detektoren gelieferten Abtastsignale angeordnet. Auf der Leiterplatte 5 befindet sich neben dieser Messelektronik weiterhin eine elektrische Kupplungsvorrichtung, im vorgestellten Ausführungsbeispiel eine Buchse 5.1. Die im Inneren der Winkelmesseinrichtung liegende Buchse 5.1 kann im Zuge der Endmontage der Winkelmesseinrichtung mit einem Stecker eines Anschlusskabels 2 verbunden werden. Der Stecker ist an den Enden von Litzen 2.2 montiert. Der Übersichtlichkeit halber wurde in allen Figuren, außer in der Figur 5, auf die Darstellung der einzelnen Litzen 2.2 verzichtet. Demzufolge ist auch der mit den Litzen 2.2 verbundene Stecker nicht näher dargestellt. Das Anschlusskabel 2 ist zu sicheren Signalübertragung im Übrigen geschirmt ausgeführt und weist im vorgestellten Ausführungsbeispiel einen im Wesentlichen kreisförmigen Querschnitt auf. Im Betrieb der Winkelmesseinrichtung stellt das Anschlusskabel 2 eine elektrische Verbindung zwischen der Winkelmesseinrichtung und einer Folgeelektronik her, so dass elektrische Signale und elektrische Energie übertragen werden können.

Zum Schutz der Winkelmesseinrichtung und deren Messelektronik ist eine topfförmige Kappe 1 vorgesehen, welche über den Umfang klemmend am Grundkörper 3 befestigt ist. Im vorgestellten Beispiel ist diese Verbindung eine Pressverbindung, wobei des Weiteren hier die Kappe 1 kostengünstig als ein einstückiges Teil mit Hilfe eines Gussverfahrens hergestellt ist.

Ferner kann die Winkelmesseinrichtung durch einen Deckel 6 verschlossen werden, der mit einer Schraube in einer Bohrung 1.2 an der Kappe 1 befestigt wird. Der Deckel 6 ist nur in der Figur 5 im Teilschnitt dargestellt. An dieser Stelle kann auch auf die Patentschrift EP 1564529 verwiesen werden, wo ein derartiger Deckel gezeigt ist.

In den Figuren 2a und 2b ist die Kappe 1 der Winkelmesseinrichtung aus der Figur 1 separat und ohne den aufgesetzten Deckel 6 dargestellt. Das Anschlusskabel 2 weist an einem Ende einen Fixierbereich auf, der im vorliegenden Ausführungsbeispiel als eine elektrisch leitende Crimphülse 2.1 ausgestaltet ist, welche mit dem Schirm des Anschlusskabels 2 in elektrischer Verbindung steht. Die Crimphülse 2.1 weist eine Längsachse L (Figuren 4a, b) auf. Aus der Crimphülse 2.1 ragen die einzelnen Adern, bzw. Litzen 2.2 des Anschlusskabels 2 heraus, die, wie bereits erwähnt, in den Figuren 2a, 2b nicht dargestellt sind.

Als Material für die Kappe 1, wie auch für den Deckel 6, wurde im gezeigten Ausführungsbeispiel eine Aluminium-Druckguss-Legierung gewählt. Alternativ dazu kann aber auch beispielsweise ein elektrisch leitender Kunststoff oder ein elektrisch leitend beschichteter Kunststoff- insbesondere ein Spritzgussteil verwendet werden.

Die topfförmige Kappe 1 weist eine im Wesentlichen hohlzylindrische Form auf, wobei eine Stirnfläche des Hohlzylinders völlig offen ist. Die entsprechend gegenüberliegende Stirnfläche, auch als Rückwand bezeichnet, weist eine zentrale Bohrung 1.2 und eine außermittige Öffnung 1.3 auf. Diese Öffnung 1.3 ist vollständig außerhalb des Mittelpunktes M (Figur 2a) der Rückwand angeordnet, d. h. der Rand der Öffnung 1.3 umschließt nicht den Mittelpunkt M. Die Öffnung 1.3 weist einen Bereich auf, welcher im Folgenden als Ausnehmung 1.31 bezeichnet wird. Zum einfachen Anschluss und Auswechseln des Anschlusskabels 2 werden die Litzen 2.2 mit dem Stecker durch diese Öffnung 1.3 der Kappe 1 geführt, so dass der Stecker in die Buchse 5.1, welche an der Leiterplatte 5 innerhalb der Winkelmesseinrichtung angeordnet ist, gesteckt werden kann.

Ferner umfasst die einstückige Kappe 1 als integralen Bestandteil eine Aufnahmevorrichtung 1.1. Das Anschlusskabel 2 wird an dessen Fixierbereich bzw. an dessen Crimphülse 2.1 bereits bei geöffnetem Deckel 6 mit Hilfe der Aufnahmevorrichtung 1.1 an der Kappe 1 festgelegt, so dass das Anschlusskabel 2 gesichert ist, bzw. die elektrische Kupplungsvorrichtung zugentlastet ist. Die Aufnahmevorrichtung 1.1 ist an die Form der Crimphülse 2.1 angepasst. Gemäß den Figuren 3a - 3c umfasst die Aufnahmevorrichtung 1.1 eine Hinterschneidung 1.11, zwei Anschläge 1.12, sowie einen weiteren Anschlag 1.13 und einen so genannten Boden 1.14. Die Ausnehmung 1.31 kann somit auch als eine Ausnehmung 1.31 des Bodens 1.14 gesehen werden.

Bezüglich des Festlegens des Anschlusskabels 2 an der Kappe 1 sind insbesondere die Orientierungen der Crimphülse 2.1 in den unterschiedlichen Montagephasen von Bedeutung. Zur weiteren Erläuterung wurden diesbezüglich eine erste Achse A und eine zweite Achse B definiert. Im Zuge der Montage des Anschlusskabels 2 wird, gemäß der Figur 2a, dieses zunächst schräg in die Aufnahmevorrichtung 1.1 eingeführt. Entsprechend der Figur 4a wird dabei das Anschlusskabel 2 bzw. die Crimphülse 2.1 entlang einer geneigten zweiten Achse B bewegt, wobei in dieser Phase die zweite Achse B mit der Längsachse L der Crimphülse 2.1 zusammenfällt. Das Anschlusskabel 2 wird so lange entlang der zweiten Achse B (in der Figur 4a nach rechts) verschoben, bis die Crimphülse 2.1 an den Anschlägen 1.12 der Aufnahmevorrichtung 1.1 anstößt. In dieser Stellung taucht die Vorderkante der Crimphülse 2.1 in die Ausnehmung 1.31 ein, so dass insgesamt der vordere Bereich der Crimphülse 2.1 in die Hinterschneidung 1.11 eintauchen kann.

Im nächsten Schritt wird die Crimphülse 2.1 um eine Gerade parallel zur y-Achse gemäß den Figuren 4a, b geschwenkt, bis schließlich die Längsachse L der Crimphülse 2.1 mit der ersten Achse A zusammenfällt. Die Achse A ist dabei parallel zur x-Achse des Koordinatensystems in den Figuren 4a, b orientiert. In dieser Stellung, gemäß der Figur 4b, ist die Crimphülse 2.1 in einer Position, in welcher die Crimphülse 2.1 und damit im Prinzip auch das Anschlusskabel 2 bereits an der Aufnahmevorrichtung 1.1 festgelegt ist. Denn die Hinterschneidung 1.11 umgreift nun die Crimphülse 2.1 derart, dass diese in einer Richtung parallel zur Drehachse R, bzw. orthogonal zur Längsachse L gehalten wird. Die entsprechenden Haltekräfte wirken also parallel zur z-Achse in der Figur 4b. In dieser Position kommt zudem die Crimphülse 2.1 in der Aufnahmevorrichtung 1.1 entlang der ersten Achse A bzw. der x-Achse zu liegen. Bedingt durch die schräge Einführrichtung ist also die zweite Achse B ist gegenüber der ersten Achse A geneigt ausgerichtet.

Die Anschläge 1.12 verhindern eine, bezogen auf die Längsachse L bzw. auf die erste Achse A, axiale Bewegung der Crimphülse 2.1 in eine erste Richtung, hier in die x-Richtung. Die Hinterschneidung 1.11 ist dabei bezüglich der Richtung entlang der ersten Achse A räumlich so angeordnet, dass diese zwischen den Anschlägen 1.12 und dem Boden 1.14 angeordnet ist. Damit die Crimphülse 2.1 auch in eine zweite Richtung (-x-Richtung) bezogen auf die Längsachse L bzw. auf die erste Achse A axial gesichert ist, weist die Aufnahmevorrichtung 1.1 als weiteren Anschlag einen Vorsprung 1.13 auf, welcher die Crimphülse 2.1 in der Position, in welcher die Crimphülse 2.1 an der Aufnahmevorrichtung 1.1 festgelegt ist, umgreift. Dabei ist der Boden 1.14 bezüglich einer Richtung entlang der ersten Achse A bzw. der x-Richtung zwischen dem Vorsprung 1.13 und der Hinterschneidung 1.11 angeordnet.

Weiterhin ist durch geometrische Ausgestaltung der Crimphülse 2.1 und der Aufnahmevorrichtung 1.1 sichergestellt, dass das Anschlusskabel 2 formschlüssig auch in y-Richtung gehalten wird, wie dies beispielsweise auch aus der Figur 5 ersichtlich ist.

Somit kann also die Crimphülse 2.1 und damit das Anschlusskabel 2 in allen Richtungen durch die Aufnahmevorrichtung 1.1 festgelegt werden. Auf diese Weise ist eine hoch wirksame Zugentlastung für die elektrische Kupplungsverbindung geschaffen, so dass bei der weiteren Montage ein Lösen der Verbindung zwischen der Buchse 5.1 und dem Stecker wirksam verhindert wird.

Die festgelegte Crimphülse 2.1 umfasst einen ersten Abschnitt 2.11, welcher am Boden 1.14 der Aufnahmevorrichtung 1.1 aufliegt. Geometrisch betrachtet kann eine Ebene Ψ definiert werden, die orthogonal zur Längsachse L der Crimphülse 2.1 in der Position, in welcher diese an der Aufnahmevorrichtung 1.1 festgelegt ist, ausgerichtet ist und gleichzeitig die Hinterschneidung 1.11 durchdringt. Somit ist diese Ebene Ψ parallel zu y-z-Ebene, gemäß dem Koordinatensystem in der Figur 4b orientiert, bzw. so ausgerichtet, dass diese parallel zur Drehachse R zu liegen kommt. In dieser Ebene Ψ liegt ein zweiter Abschnitt 2.12 der Crimphülse 2.1, welcher bezüglich des Bodens 1.14 berührungsfrei angeordnet ist. Mit anderen Worten berührt der zweite Abschnitt 2.12 den Boden 1.14 in der Ebene Ψ nicht. Dagegen liegt der erste Abschnitt 2.11 der Crimphülse 2.1 außerhalb der Ebene Ψ berührend auf dem Boden 1.14 der Aufnahmevorrichtung 1.1 auf.

Weiterhin ist die Längsachse L der Crimphülse 2.1 in der Position, in welcher diese an der Aufnahmevorrichtung 1.1 festgelegt ist, orthogonal zur Drehachse R ausgerichtet, bzw. kommt in einer Ebene zu liegen welche von der Drehachse R rechtwinklig geschnitten wird.

Die formschlüssige Befestigung des Anschlusskabels 2 an der Kappe 1 bei geöffnetem Deckel 6 dient in erster Line zur einfachen Montage der Winkelmesseinrichtung, insbesondere zur einfachen gesicherten Herstellung der Steckverbindung zwischen dem Anschlusskabel 2 und der Leiterplatte 5 im Inneren der Winkelmesseinrichtung. Nachdem die Steckverbindung des festgelegten Anschlusskabels 2 hergestellt ist, wird der Deckel 6 an der Kappe 1 befestigt. Zu diesem Zweck wird eine Schraube durch ein entsprechendes Loch im Deckel 6 gesteckt und in die zentrale Bohrung 1.2 der Kappe 1, welche ein Innengewinde aufweist, gedreht. Der Deckel 6 dient unter anderem zum Verschließen der Öffnung 1.3. Ferner umschließt der Deckel 6 auch die Crimphülse 2.1 und die Aufnahmevorrichtung der Kappe 1. Die vom Deckel 6 umschlossen Bauelemente sind durch diesen allseitig zumindest staubdicht gegenüber der Umgebung abgedeckt und gegen elektromagnetische Felder abgeschirmt. Um eine dichte Verbindung zwischen dem Deckel 6 und der Rückwand der Kappe 1 zu schaffen, erstrecken sich die seitlichen Ränder des Deckels 6 bis auf die Oberfläche der Rückwand bzw. bis zur Seitenwand der Kappe 1.

Durch die spezielle Ausgestaltung des Deckels 6 wird, gemäß der Figur 5, auf die Crimphülse 2.1 auch vom geschlossenen Deckel 6 eine Kraft eingeleitet, welche die Crimphülse 2.1 gegen die Aufnahmevorrichtung 1.1 drückt und somit eine erhöhte Kontaktsicherheit der Schirmanbindung gewährleistet. Mit anderen Worten wird nach dem Schließen des Deckels 6 durch diesen eine Kraft erzeugt, welche das Anschlusskabel 2 zur weiteren Zugentlastung an die Kappe 1 drückt. Durch diese Maßnahme werden die zulässigen Zugkräfte für die Zugentlastung erhöht.

Die Crimphülse 2.1 stellt somit eine elektrische Verbindung zwischen dem Schirm des Anschlusskabels 2 und der Kappe 1 samt Deckel 6 her. Die Kappe 1 ist dadurch über das Anschlusskabel 2 auf einfache Weise mit dem Bezugspotential einer Folgeelektronik (Zähler, Steuerung) verbindbar.

## Patentansprüche

1. Winkelmesseinrichtung zur Bestimmung der relativen Winkelstellung zwischen zwei Bauteilen (3, 4), die um eine Drehachse (R) drehbar angeordnet sind, mit
- einer Kappe (1),
- einem Anschlusskabel (2), umfassend einen Fixierbereich (2.1), welcher eine Längsachse (L) aufweist, und
- einer Aufnahmevorrichtung (1.1), welche an der Kappe (1) angeordnet ist, zur Aufnahme des Fixierbereichs (2.1) des Anschlusskabels (2), wobei die Aufnahmevorrichtung (1.1) eine Hinterschneidung (1.11) aufweist zum formschlüssigen Halten des Fixierbereichs (2.1) in einer Richtung mit einer Richtungskomponente orthogonal zur Längsachse (L), wobei
die Längsachse (L) des Fixierbereichs (2.1) in einer Position, in welcher der Fixierbereich (2.1) an der Aufnahmevorrichtung (1.1) festgelegt ist, entlang einer ersten Achse (A) zu liegen kommt,
die Längsachse (L) des Fixierbereichs mit einer Bewegung entlang einer zweiten Achse (B) in die Hinterschneidung (1.11) der Aufnahmevorrichtung (1.1) einführbar ist, wobei die zweite Achse (B) gegenüber der ersten Achse (A) geneigt ausgerichtet ist.

2. Winkelmesseinrichtung gemäß dem Anspruch 1, wobei die Aufnahmevorrichtung (1.1) einen Boden (1.14) aufweist, und in der Position, in welcher der Fixierbereich (2.1) an der Aufnahmevorrichtung (1.1) festgelegt ist,
a) ein erster Abschnitt (2.11) des Fixierbereichs (2.1) auf dem Boden (1.14) zu liegen kommt und
b) ein zweiter Abschnitt (2.12) des Fixierbereichs (2.1) in einer geometrischen Ebene (Ψ), die orthogonal zur Längsachse (L) ausgerichtet ist und die Hinterschneidung (1.11) durchdringt, bezüglich des Bodens (1.14) berührungsfrei angeordnet ist.

3. Winkelmesseinrichtung gemäß dem Anspruch 2, wobei der Boden (1.14) eine Ausnehmung (1.31) aufweist, welche von der Ebene (Ψ) geschnitten wird, zur Erreichung der partiellen Berührungsfreiheit zwischen dem Fixierbereich (2.1) und dem Boden (1.14).

4. Winkelmesseinrichtung gemäß dem Anspruch 3, wobei die Kappe (1) eine Öffnung (1.3) aufweist, durch welche eine elektrische Kupplungsvorrichtung (5.1) zugänglich ist und die Öffnung (1.3) die Ausnehmung (1.31) umfasst.

5. Winkelmesseinrichtung gemäß einem der vorhergehenden Ansprüche, wobei die Aufnahmevorrichtung (1.1) einen Anschlag (1.12) aufweist, welcher so angeordnet ist, dass bezüglich einer Richtung entlang der ersten Achse (A) zwischen dem Anschlag (1.12) und dem Boden (1.14) die Hinterschneidung (1.11) angeordnet ist.

6. Winkelmesseinrichtung gemäß dem Anspruch 5, wobei die Aufnahmevorrichtung (1.1) zwei Anschläge (1.12) aufweist, zur beidseitigen axialen Sicherung des Anschlusskabels (2).

7. Winkelmesseinrichtung gemäß einem der vorhergehenden Ansprüche, wobei die Aufnahmevorrichtung (1.1) einen weiteren Anschlag (1.13) aufweist, welcher so angeordnet ist, dass bezüglich einer Richtung entlang der ersten Achse (A) der Boden (1.14) zwischen dem Anschlag (1.13) und der Hinterschneidung (1.11) angeordnet ist.

8. Winkelmesseinrichtung gemäß einem der vorhergehenden Ansprüche, wobei die Aufnahmevorrichtung (1.1), derart ausgestaltet ist, dass in der Position des Fixierbereichs (2.1), in welcher der Fixierbereich (2.1) an der Aufnahmevorrichtung (1.1) festgelegt ist, die Längsachse (L) so zu liegen kommt, dass sich deren Ausrichtung von der Ausrichtung der Drehachse (R) unterscheidet.

9. Winkelmesseinrichtung gemäß dem Anspruch 8, wobei die Aufnahmevorrichtung (1.1), derart ausgestaltet ist, dass die Längsachse (L) des Fixierbereichs (2.1) in einer Ebene zu liegen kommt, welche von der Drehachse (R) rechtwinklig geschnitten wird.

10. Winkelmesseinrichtung gemäß einem der vorhergehenden Ansprüche, wobei die Kappe (1) mit der Aufnahmevorrichtung (1.1) als ein einstückiges Teil mit Hilfe eines Gussverfahrens hergestellt ist.

## Claims

1. Angle measuring unit for determining the relative angular position of two components (3, 4) which are disposed so as to be rotatable about a rotation axis (R), the angle measuring unit having
- a cap (1);
- a connector cable (2) comprising a fixing region (2.1) which has a longitudinal axis (L); and
- a receptacle device (1.1), which is disposed on the cap (1), for receiving the fixing region (2.1) of the connector cable (2), wherein the receptacle device (1.1) has an undercut (1.11) for holding the fixing region (2.1) in a formfitting manner in a direction with a directional component being orthogonal to the longitudinal axis (L), wherein
the longitudinal axis (L) of the fixing region (2.1) in a position in which the fixing region (2.1) is located on the receptacle device (1.1) comes to lie in a first axis (A),
the longitudinal axis (L) of the fixing region by way of movement along a second axis (B) is introducible into the undercut (1.11) of the receptacle device (1.1), wherein the second axis (B) is aligned so as to be inclined in relation to the first axis (A).

2. Angle measuring unit according to Claim 1, wherein the receptacle device (1.1) has a base (1.14) and in the position in which the fixing region (2.1) is located on the receptacle device (1.1)
- a first portion (2.11) of the fixing region (2.1) comes to lie on the base (1.14); and
- a second portion (2.12) of the fixing region (2.1) is disposed in a geometric plane (Ψ) which is aligned so as to be orthogonal to the longitudinal axis (L) and penetrates the undercut (1.11), so as to be non-contacting in relation to the base (1.14).

3. Angle measuring unit according to Claim 2, wherein the base (1.14) has a clearance (1.31), which is intersected by the plane (Ψ), for achieving partial non-contacting of the fixing region (2.1) and the base (1.14).

4. Angle measuring unit according to Claim 3, where in the cap (1) has an opening (1.3) by way cf which an electrical coupling device (5.1) is accessible and the opening (1.3) encompasses the clearance (1.31).

5. Angle measuring unit according to one of the preceding claims, wherein the receptacle device (1.1) has a stop (1.12) which is disposed such that the undercut (1.11) is disposed between the stop (1.12) and the base (1.14), so as to be in relation to a direction along the first axis (A).

6. Angle measuring unit according to Claim 5, wherein the receptacle device (1.1) has two stops (1.12) for axially securing the connector cable (2) on either side.

7. Angle measuring unit according to one of the preceding claims, wherein the receptacle device (1.1) has a further stop (1.13) which is disposed such that the base (1.14) is disposed between the stop (1.13) and the undercut (1.11), so as to be in relation to a direction along the first axis (A).

8. Angle measuring unit according to one of the preceding claims, wherein the receptacle device (1.1) is designed in such a manner that in the position of the fixing region (2.1) in which the fixing region (2.1) is located on the receptacle device (1.1) the longitudinal axis (L) comes to lie such that the alignment of the latter differs from the alignment of the rotation axis (R).

9. Angle measuring unit according to Claim 8, wherein the receptacle device (1.1) is designed in such a manner that the longitudinal axis (L) of the fixing region (2.1) comes to lie in a plane which is perpendicularly intersected by the rotation axis (R).

10. Angle measuring unit according to one of the preceding claims, wherein the cap (1) having the receptacle device (1.1) is manufactured as an integral part with the aid of a casting method.

## Revendications

1. Dispositif de mesure d'angle pour déterminer la position angulaire relative entre deux composants (3, 4) qui sont disposés de manière à pouvoir tourner autour d'un axe de rotation (R), comprenant
- un chapeau (1),
- un câble de raccordement (2), comprenant une région de fixation (2.1) qui présente un axe longitudinal (L), et
- un dispositif de réception (1.1) qui est disposé au niveau du chapeau (1) pour recevoir la région de fixation (2.1) du câble de raccordement (2), le dispositif de réception (1.1) présentant une contre-dépouille (1.11) pour retenir par engagement par correspondance de formes la région de fixation (2.1) dans une direction avec une composante de direction orthogonale à l'axe longitudinal (L),
l'axe longitudinal (L) de la région de fixation (2.1) venant s'appliquer le long d'un premier axe (A) dans une position dans laquelle la région de fixation (2.1) est fixée au dispositif de réception (1.1),
l'axe longitudinal (L) de la région de fixation pouvant être introduit avec un déplacement le long d'un deuxième axe (B) dans la contre-dépouille (1.11) du dispositif de réception (1.1), le deuxième axe (B) étant orienté de manière inclinée par rapport au premier axe (A).

2. Dispositif de mesure d'angle selon la revendication 1, dans lequel le dispositif de réception (1.1) présente un fond (1.14) et, dans la position dans laquelle la région de fixation (2.1) est fixée au dispositif de réception (1.1),
a) une première portion (2.11) de la région de fixation (2.1) venant s'appliquer sur le fond (1.14), et
b) une deuxième portion (2.12) de la région de fixation (2.1), dans un plan géométrique (Ψ), qui est orienté perpendiculairement à l'axe longitudinal (L) et qui traverse la contre-dépouille (1.11), étant disposée sans contact par rapport au fond (1.14).

3. Dispositif de mesure d'angle selon la revendication 2, dans lequel le fond (1.14) présente un évidement (1.31) lequel est coupé par le plan (Ψ), pour obtenir l'absence de contact partielle entre la région de fixation (2.1) et le fond (1.14).

4. Dispositif de mesure d'angle selon la revendication 3, dans lequel le chapeau (1) présente une ouverture (1.3) à travers laquelle un dispositif d'accouplement électrique (5.1) est accessible et l'ouverture (1.3) comprend l'évidement (1.31).

5. Dispositif de mesure d'angle selon l'une quelconque des revendications précédentes, dans lequel le dispositif de réception (1.1) présente une butée (1.12) qui est disposée de telle sorte que la contre-dépouille (1.11) soit disposée entre la butée (1.12) et le fond (1.14) par rapport à une direction le long du premier axe (A).

6. Dispositif de mesure d'angle selon la revendication 5, dans lequel le dispositif de réception (1.1) présente deux butées (1.12) pour la fixation axiale bilatérale du câble de raccordement (2).

7. Dispositif de mesure d'angle selon l'une quelconque des revendications précédentes, dans lequel le dispositif de réception (1.1) présente une butée supplémentaire (1.13) qui est disposée de telle sorte que le fond (1.14) soit disposé entre la butée (1.13) et la contre-dépouille (1.11) par rapport à une direction le long du premier axe (A).

8. Dispositif de mesure d'angle selon l'une quelconque des revendications précédentes, dans lequel le dispositif de réception (1.1) est configuré de telle sorte que dans la position de la région de fixation (2.1), dans laquelle la région de fixation (2.1) est fixée au dispositif de réception (1.1), l'axe longitudinal (L) vienne se placer de telle sorte que son orientation soit différente de l'orientation de l'axe de rotation (R).

9. Dispositif de mesure d'angle selon la revendication 8, dans lequel le dispositif de réception (1.1) est configuré de telle sorte que l'axe longitudinal (L) de la région de fixation (2.1) vienne se placer dans un plan qui est coupé à angle droit par l'axe de rotation (R).

10. Dispositif de mesure d'angle selon l'une quelconque des revendications précédentes, dans lequel le chapeau (1) est fabriqué avec le dispositif de réception (1.1) sous forme de pièce d'un seul tenant à l'aide d'un procédé de moulage.
